# EUROPEAN PATENT APPLICATION

(11) **EP 4 297 146 A1**
(43) Date of publication of application: **27.12.2023**
(21) Application number: 22756451.5
(22) Date of filing: 15.02.2022
(51) Int. Cl.: H01M 10/52, H01M 4/62, H01M 10/42, H01M 10/058, H01M 10/052

(54) **ADDITIVE, CONTAINING ALUMINUM SILICATE, FOR SECONDARY BATTERY ELECTROLYTE AND PREPARATION METHOD THEREFOR**

(30) Priority: 17.02.2021 KR 20210021389
(71) Applicant: Giant Chemical Co., Ltd, Yangsan-si Gyeongsangnam-do 50567 (KR)
(72) Inventor: SEONG, Dong Min, Ulsan 44727 (KR); KIM, Dong Hyun, Busan 46927 (KR); KANG, Dong Gyun, Yangsan-si Gyeongsangnam-do 50567 (KR); KIM, Dae Uk, Ulsan 44784 (KR); KANG, Jin Kyu, Ulsan 44784 (KR); HAN, Seung Yun, Ulsan 44784 (KR)
(74) Representative: Gulde & Partner
(86) International application number: PCT/KR2022/002192
(87) International publication number: WO 2022/177253

(57) **Abstract**

The present invention relates to an additive, containing aluminum silicate, for a secondary battery electrolyte and a preparation method therefor and, more specifically, to an additive, containing aluminum silicate, for a secondary battery electrolyte and a preparation method therefor, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

## Description

### TECHNICAL FIELD

The present invention relates to an additive, containing aluminum silicate, for secondary battery electrolyte and a preparation method therefor and, more specifically, to an additive, containing aluminum silicate, for secondary battery electrolyte and a preparation method therefor, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

### BACKGROUND ART

Nanoporous materials having large specific surface area and uniform pores are widely used as adsorbents, catalyst supports, separation and purification processes, and ion exchange media. In particular, synthesis of novel nanostructured materials having controlled porosity has been continuously studied in the field of new materials.

Among them, aluminum silicate, a porous inorganic chemical compound synthesized by precipitation reaction of water soluble aluminum salts and sodium silicate, can be used for industrial purposes and food purification and in such fields as cosmetic raw materials.

According to most of the silica and silicate-related reports to date, silica and silicate have been synthesized by using tetraethyl orthosilicate (TEOS) as a silica precursor. Due to its high reactivity, TEOS allows for synthesis of silica according to pH and has a great advantage that high-purity inorganic compounds can be synthesized due to its low impurity content. However, the high unit price of TEOS makes it difficult to secure price competitiveness in the global market.

The shape, particle size, and surface properties of the particles of silicate-based inorganic compounds may be controlled by controlling various variables (pH, surfactant, temperature, concentration, etc.) by using a sol-gel synthesis method, but few studies have been performed to investigate the exact mechanism thereof. In addition, the difficulties in controlling conditions due to the particle size and the wide pH range of aluminum silicate have limited the development of aluminum silicate to the control of the porosity.

Meanwhile, lithium secondary batteries are used in a high voltage range after undergoing high voltage activation to increase energy density. At high voltage, an active material and an electrolyte cause side reactions, which deteriorates the degradation of battery performance, and an active material is eluted into an electrolyte during charging and discharging, ultimately causing degeneration of the battery.

To alleviate these disadvantages, electrolyte additives are used to protect a cathode, which are oxidized earlier than other electrolytes to form a protective film on the surface of a cathode during charging of a lithium secondary battery. However, the existing additives, most of which are made of organic compounds, are not eco-friendly, and they fail to suppress the deterioration of battery performance to a satisfactory level, hindering the development of high-performance (high-output) lithium secondary batteries.

Therefore, to overcome the problems described above, having recognized that there is an urgent need for developing an electrolyte additive for lithium secondary batteries to develop lithium secondary batteries having improved capacity degradation properties and improved life stability in a high voltage cycle, the present inventors completed the present invention.

### DETAILED DESCRIPTION OF THE INVENTION

### TECHNICAL PROBLEM

A purpose of the present invention is to provide an additive for secondary battery electrolyte, containing aluminum silicate, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

Another purpose of the present invention is to provide a preparation method of an additive for secondary battery electrolyte, containing aluminum silicate, wherein the additive can reversibly improve the absorption and release of lithium ions in a secondary battery electrode and promote the formation of a solid-electrolyte interphase (SEI), while not affecting charge and discharge capacity by suppressing electrochemical side reactions.

The technical problems to be solved by the present invention are not limited to the technical problems mentioned above, and other technical problems that are not mentioned can be clearly understood by those skilled in the art from the description of the present invention.

### TECHNICAL SOLUTION

To achieve the purposes described above, the present invention provides a preparation method of an additive for secondary battery electrolyte, containing aluminum silicate.

Hereinafter, this specification will be described in more detail.

The present invention provides an additive for secondary battery electrolyte, containing aluminum silicate.

In the present invention, the aluminum silicate is characterized in that it has a particle size of 200 nm to 20 µm.

In the present invention, the aluminum silicate is characterized in that it has a mass ratio of 60 to 70 wt% of oxygen (O), 0.1 to 2.0 wt% of aluminum (Al), and 25 to 35 wt% of silicon (Si).

In the present invention, the aluminum silicate is characterized in that it has a specific surface area of 50 to 1,000 m²/g.

In the present invention, the aluminum silicate is characterized in that it has a pore size of 0.1 to 20 nm.

In addition, the present invention provides a preparation method of an additive for secondary battery electrolyte, containing aluminum silicate, characterized in that it comprises the steps described below:
(A1) preparing a first mixture by mixing a surfactant and an aluminum precursor;
(A2) preparing a second mixture by adding a silicate precursor to the first mixture; and
(A3) preparing an additive for secondary battery electrolyte, containing aluminum silicate, by calcinating the second mixture.

In the present invention, the step (A1) is characterized in that it consists of the steps described below:
(A1a) dissolving the surfactant in a solvent; and
(A1b) preparing a first mixture by adding an aluminum precursor to the dissolved solution.

In the present invention, the step (A2) is characterized in that it consists of the steps described below:
(A2a) adding a silicate precursor to the first mixture; and
(A2b) preparing a second mixture by heating the first mixture to which the silicate precursor is added. In the present invention, the step (A3) is characterized in that it consists of the steps described below:
(A3a) cooling the second mixture; and
(A3b) filtering and drying the cooled second mixture; and
(A3c) preparing an additive for secondary battery electrolyte, containing aluminum silicate, by calcinating the dried second mixture at 300 to 800°C.

In addition, the present invention provides a secondary battery electrolyte comprising an additive for secondary battery electrolyte, containing the aluminum silicate.

In the present invention, the secondary battery electrolyte is characterized in that it comprises the additive for secondary battery electrolyte in an amount of 0.1 to 2.0% by weight based on the total weight% of the secondary battery electrolyte.

In addition, the present invention provides a secondary battery characterized in that it comprises the secondary battery electrolyte.

All matters mentioned about the additive for secondary battery electrolyte, containing the aluminum silicate, the preparation method therefor, the secondary battery electrolyte comprising the same, and the secondary battery comprising the secondary battery electrolyte are equally applied unless they are contradictory with each other.

### ADVANTAGEOUS EFFECTS

The additive for secondary battery electrolyte, containing the aluminum silicate, and the preparation method therefor of the present invention can reversibly improve the absorption and release of lithium ions in a secondary battery electrode and promote the formation of a solid-electrolyte interphase (SEI), while not affecting charge and discharge capacity by suppressing electrochemical side reactions.

The effects of the present invention are not limited to the effects mentioned above, and other effects that are not mentioned will be clearly understood by those skilled in the art from the recitations of the claims.

### DESCRIPTION OF THE DRAWINGS

FIG. 1 is a scanning electron microscope (SEM) image confirming the particle size of the aluminum silicate for the secondary battery additive according to the present invention.
FIG. 2 is an energy dispersive X-ray spectroscopy (EDS) image confirming the composition of the aluminum silicate for the secondary battery additive according to the present invention.
FIG. 3 is a graph confirming the specific surface area of the aluminum silicate for the secondary battery additive according to the present invention and the pore size present on the surface of the aluminum silicate.
FIG. 4 is a galvanostatic charge-discharge cycle confirming whether the application of the aluminum silicate according to the present invention as an additive affects a cathode of a secondary battery.
FIG. 5 is a differential capacity analysis (dQ/dV) graph confirming whether the application of the aluminum silicate according to the present invention as an additive affects a cathode of a secondary battery.
FIG. 6 is an electrochemical impedance spectroscopy (EIS) graph confirming whether the application of the aluminum silicate according to the present invention as an additive affects a cathode of a secondary battery.
FIG. 7 is a graph of discharge capacity retention characteristics that change as the charge-discharge cycle proceeds, confirming whether the application of the aluminum silicate according to the present invention as an additive affects a cathode of a secondary battery.
FIG. 8 is a galvanostatic charge-discharge cycle to confirming whether the application of the aluminum silicate according to the present invention as an additive affects an anode of a secondary battery.
FIG. 9 is an electrochemical impedance spectroscopy (EIS) graph confirming whether the application of the aluminum silicate according to the present invention as an additive affects an anode of a secondary battery.

### BEST MODE

The terms used in this specification have been selected from general terms that are currently widely used as much as possible while considering the functions in the present invention, but they may vary depending on the intention of one of ordinary skill in the art or a precedent, the emergence of new technologies, and the like. In addition, in a specific case, there is also a term arbitrarily selected by the applicant, and in this case, the meaning will be described in detail in the detailed description of the invention. Therefore, the terms used in the present invention should be defined based on the meaning of the terms and the overall content of the present invention, not simply the title of the terms.

Unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in the present application, they should not be interpreted in an ideal or excessively formal meaning.

Numerical ranges include the values defined therein. Every maximum numerical limitation given throughout this specification includes every lower numerical limitation, as if such lower numerical limitations were explicitly written. Every minimum numerical limitation given throughout this specification includes every higher numerical limitation, as if such higher numerical limitations were explicitly written. Every numerical limitation given throughout this specification will include every better numerical range within the broader numerical range, as if the narrower numerical limitations were explicitly written.

Hereinafter, embodiments of the present invention will be described in detail, but it is obvious that the present invention is not limited by the following embodiments.

### Additive for secondary battery electrolyte, containing aluminum silicate, and preparation method therefor

The present invention provides an additive for secondary battery electrolyte, containing aluminum silicate.

The aluminum silicate may have a particle size of 200 nm to 20 µm. The aluminum silicate can be prepared from nano size to micro size.

The aluminum silicate consists of oxygen (O) in a mass ratio of 60 to 70 wt%, aluminum (Al) 0.1 to 2.0 wt%, and silicon (Si) 25 to 35 wt%, preferably, oxygen (O) in a mass ratio 63 to 70 wt%, aluminum (Al) 0.5 to 1.5 wt%, and silicon (Si) 27 to 32 wt%.

The aluminum silicate may have a specific surface area of 50 to 1,000 m²/g, preferably, a specific surface area of 200 to 1,000 m²/g, and most preferably, a specific surface area of 400 to 1,000 m²/g.

The aluminum silicate may have a pore size of 0.1 to 20 nm, preferably, a pore size of 0.5 to 15 nm, and most preferably, a pore size of 1.0 to 10 nm.

In addition, the present invention provides a preparation method of an additive for secondary battery electrolyte, containing aluminum silicate, the preparation method comprising the steps described below:
(A1) preparing a first mixture by mixing a surfactant and an aluminum precursor;
(A2) preparing a second mixture by adding a silicate precursor to the first mixture; and
(A3) preparing an additive for secondary battery electrolyte, containing aluminum silicate, by calcinating the second mixture.

The step (A1) may consist of the steps described below:
(A1a) dissolving the surfactant in a solvent; and
(A1b) preparing a first mixture by adding an aluminum precursor to the dissolved solution.

The surfactant may be a cationic surfactant, an anionic surfactant, an amphoteric surfactant or a nonionic surfactant, preferably, one or more selected from the group consisting of a cationic surfactant, an anionic surfactant, and an amphoteric surfactant.

The solvent may be a single solvent or a mixture containing the same, and more specifically, one or more selected from the group consisting of water (H₂O), methanol, ethanol, acetone, ethyl acetate, acetic acid, acetamide, dimethoxyethane, and tetrahydrofuran.

The aluminum precursor may be one or more selected from the group consisting of aluminum nitrate, aluminum sulfate, and aluminum chloride, and a single precursor or a mixed precursor may be used as the aluminum precursor.

The step (A2), which is a step of preparing a second mixture, may consist of the steps described below:
(A2a) adding a silicate precursor to the first mixture; and
(A2b) preparing a second mixture by heating the first mixture to which the silicate precursor is added.

The silicate precursor may be one or more selected from the group consisting of sodium silicate, tetramethyl orthosilicate, tetraethyl orthosilicate, tetrapropyl orthosilicate, triethoxyethylsilane (TEES), and 1,2-bistriethoxysilylethane.

The heating performed in step (A2b) may be individually performed 1 to 5 times at 20 to 150°C. For example, the second mixture may be prepared by performing primary heating of the first mixture to which the silicate precursor is added at 20 to 60°C and then performing secondary heating of the same at 60 to 150°C.

The step (A3), which is a step of preparing an additive for secondary battery electrolyte, containing aluminum silicate, according to the present invention, may consist of the steps described below:
(A3a) cooling the second mixture; and
(A3b) filtering and drying the cooled second mixture; and
(A3c) preparing an additive for secondary battery electrolyte, containing aluminum silicate, by calcinating the dried second mixture at 300 to 800°C.

The cooling performed in step (A3a) may be performed at normal temperature or room temperature, and may be performed for 1 to 48 hours.

The drying performed in step (A3b) may be performed by natural drying (room temperature drying), freeze drying, spray drying, or vacuum drying, and if the method is for drying all the solvents contained in the second mixture, the method is not limited thereto.

The step (A3c) is a step of calcinating the dried second mixture, wherein the calcinating may be performed at 300 to 800°C, preferably, at 400 to 700° C for 1 to 24 hours.

The calcination reaction performed in the step (A3c) is a process of removing organic substances, surfactants, impurities, and the like remaining on the surface of the finally prepared aluminum silicate. When the calcination reaction is not performed, pores are blocked by a large number of organic substances, impurities, and the like on the surface of the finally prepared aluminum silicate so that high specific surface area characteristics may not be exhibited.

### Secondary battery electrolyte containing an additive for secondary battery electrolyte, containing aluminum silicate, and secondary battery containing the same

The present invention provides a secondary battery electrolyte comprising an additive for secondary battery electrolyte, containing the aluminum silicate.

The secondary battery electrolyte may comprise the additive for secondary battery electrolyte in an amount of 0.1 to 2.0% by weight based on the total weight% of the secondary battery electrolyte.

In addition, the present invention provides a secondary battery comprising the secondary battery electrolyte.

The secondary battery can extend the lifetime of a secondary battery and improve its efficiency by suppressing side reactions and electrolyte decomposition occurring at a secondary battery electrode by comprising the secondary battery electrolyte in an optimal weight.

Advantages and features of the present invention, and methods of achieving them, will become clear with reference to the embodiments described below in detail. However, the present invention is not limited to the embodiments disclosed below, but may be implemented in various different forms. The embodiments are provided only for making the disclosure of the present invention complete and fully informing to one of ordinary skill in the art the scope of the invention, and the and the present invention is only defined by the scope of the claims.

### Example 1. Preparation of aluminum silicate for secondary battery additive

A surfactant (P123, Pluronic P-123, BASF) was mixed to a surfactant/Si ratio of 0.014, and the resulting mixture was dissolved in 100 mL of distilled water. Aluminum sulfate (Al₂(SO₄)₃·18H₂O), which is an aluminum precursor, was added the solution in which the surfactant had been dissolved to a Si/Al ratio of 30, and then stirred. In addition, 4.5 g of tetraethyl orthosilicate (TEOS), which is a silicate precursor, was added to the solution and stirred for 15 hours, and the resulting solution was further stirred at 40°C for 24 hours. The completely stirred solution was transferred to an autoclave and subjected to a reaction at 90°C for 48 hours to form a high specific surface area through interactions of the surfactant, the silicate precursor, and the aluminum precursor. Then, after cooling the reactant to room temperature, aluminum silicate produced in the reaction was filtered, washed with distilled water, dried at 60°C, and calcinated in an electric furnace at 550°C for 5 hours to prepare the aluminum silicate for secondary battery additive according to the present invention.

### Example 2. Electrolyte 1 for secondary battery, containing aluminum silicate as an additive

Ethylene carbonate (EC) and diethyl carbonate (DEC) were mixed at a weight ratio of 1:1, and the resulting mixture was mixed with LiPF₆ to prepare a liquid electrolyte LiPF₆-EC/DEC. The aluminum silicate prepared in Example 1 above was mixed in an amount of 0.005 g (0.5 wt% of the total weight of the liquid electrolyte) to 1 g of the liquid electrolyte (LiPF₆-EC/DEC) to prepare Electrolyte 1 for secondary battery, containing aluminum silicate, according to the present invention.

### Example 3. Electrolyte 2 for secondary battery, containing aluminum silicate as an additive

The aluminum silicate prepared in Example 1 above was mixed in an amount of 0.01 g (1.0 wt% of the total weight of the liquid electrolyte) to 1 g of the liquid electrolyte (LiPF₆-EC/DEC) prepared in Example 2 above to prepare Electrolyte 2 for secondary battery, containing aluminum silicate, according to the present invention.

### Comparative Example 1. Comparative Electrolyte 1 for secondary battery, not containing aluminum silicate as an additive

Ethylene carbonate (EC) and diethyl carbonate (DEC) were mixed at a weight ratio of 1:1, and the resulting mixture was mixed with LiPF₆ to prepare Comparative Electrolyte 1 for secondary battery consisting of a liquid electrolyte LiPF₆-EC/DEC.

### Comparative Example 2. Comparative Electrolyte 2 for secondary battery, containing aluminum silicate as an additive

The aluminum silicate prepared in Example 1 above was mixed in an amount of 0.02 g (2.0 wt% of the total weight of the liquid electrolyte) to 1 g of the liquid electrolyte LiPF₆-EC/DEC prepared in Example 2 above to prepare Comparative Electrolyte 2 for secondary battery, containing aluminum silicate.

### Experimental Example 1. Analysis of aluminum silicate material for secondary battery additive

### 1.1. Particle size analysis of aluminum silicate

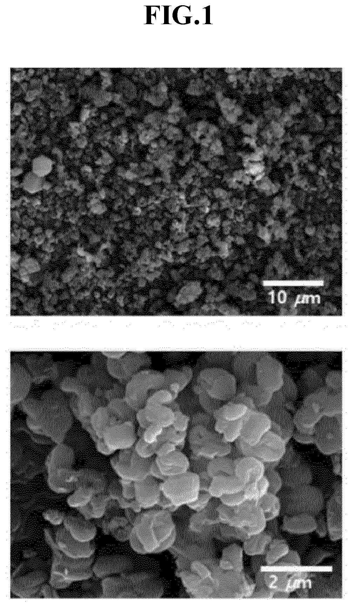

To confirm the particle size of the aluminum silicate for secondary battery additive according to the present invention, a scanning electron microscope (SEM) image was obtained from the aluminum silicate for secondary battery additive prepared in Example 1 above, and the results are shown in FIG. 1.

Referring to FIG. 1, it is confirmed that the aluminum silicate for secondary battery additive (Example 1) according to the present invention has a particle size range of 200 nm to 20 µm.

### 1.2. Composition analysis of aluminum silicate

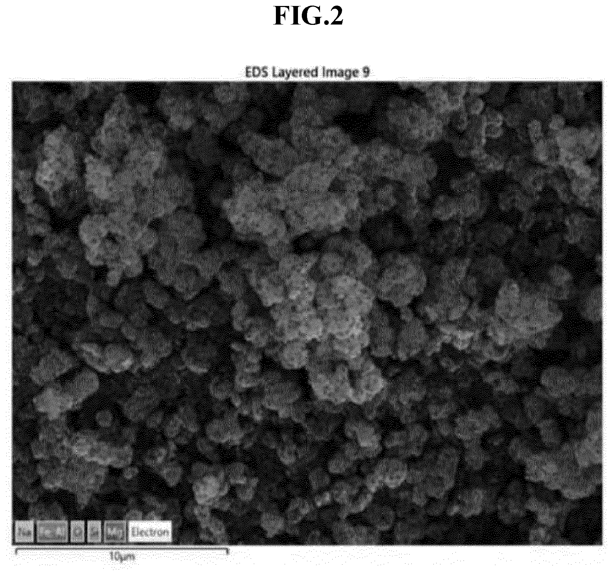

To confirm the composition of the aluminum silicate for secondary battery additive according to the present invention, the aluminum silicate for secondary battery additive prepared in Example 1 was subjected to energy dispersive X-ray spectroscopy (EDS), and the results are shown in FIG. 2 and [Table 1] below.

**[Table 1]**

| **Element** | **Composition ratio (wt%)** |
|---|---|
| Oxygen (O) | 67.72 |
| Aluminum (Al) | 0.82 |
| Silicon (Si) | 31.46 |

Referring to FIG. 2 and [Table 1], it can be confirmed that the aluminum silicate for secondary battery additive (Example 1) according to the present invention is an aluminum silicate consisting of oxygen, aluminum, and silicon.

### 1.3. Analysis of specific surface area and pore size of aluminum silicate

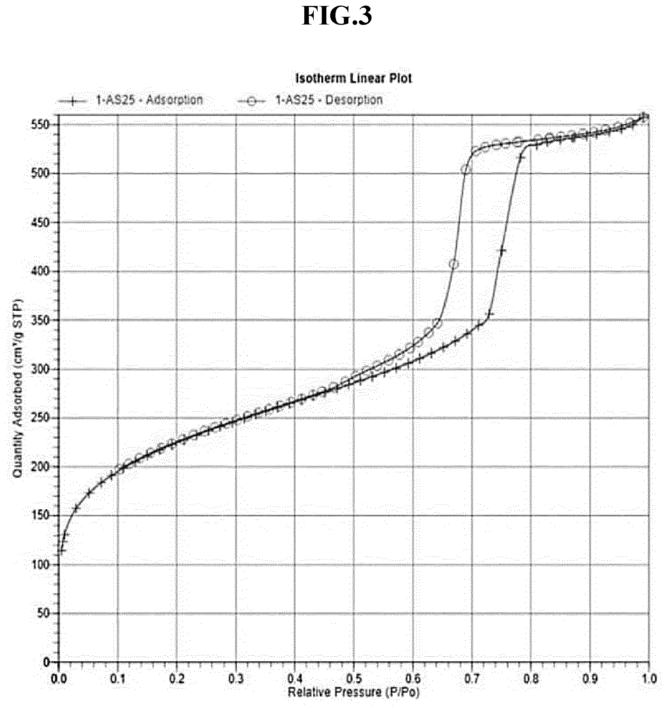

To confirm the specific surface area of the aluminum silicate for secondary battery additive according to the present invention and the pore size present on the surface of the aluminum silicate, the specific surface area and pore size of the aluminum silicate for secondary battery additive prepared in Example 1 above were measured by using a BET specific surface area measurement apparatus, and the results are shown in FIG. 3.

Referring to FIG. 3, it can be confirmed that the aluminum silicate for secondary battery additive (Example 1) according to the present invention has a surface area of 813.50 m²/g, and pores of 5.91 nm are formed on the surface of the aluminum silicate.

The results described above suggest that the aluminum silicate for secondary battery additive according to the present invention can contribute to the suppressing of electrolyte decomposition and the improving of the capacity retention rate of secondary batteries by adsorbing impurities that may occur due to the use of a secondary battery.

### Experimental Example 2. Analysis of effects of the electrolyte for secondary battery, containing aluminum silicate as an additive - Applied to cathode

### 2.1. Confirmation of galvanostatic charge-discharge cycles according to additive

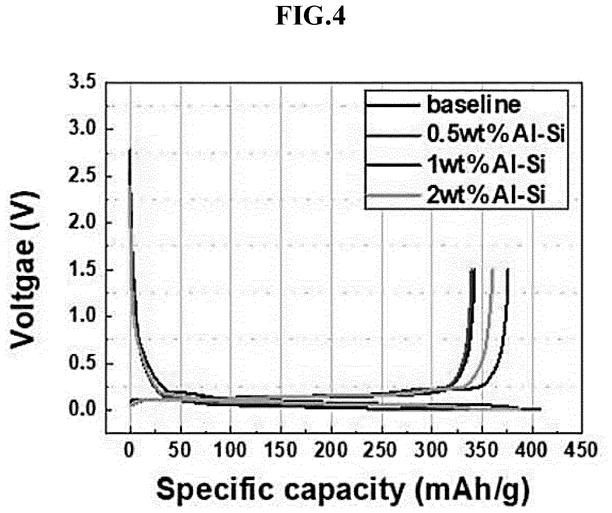

To confirm whether the application of the aluminum silicate according to the present invention as an additive affects the efficiency of a secondary battery, galvanostatic charge-discharge cycles were measured with a cathode half cell (natural graphite anode half cell) of a lithium secondary battery comprising the electrolyte for secondary battery, containing the aluminum silicate prepared in Examples 2 and 3 above as an additive, and the results are shown in FIG. 4 and [Table 2] below.

**[Table 2]**

| | 1^{st} cycle charge capacity (mAh/g) | 1^{st} cycle discharge capacity (mAh/g) | I.C.E (%) |
|---|---|---|---|
| Comparative Example 1 | 375 | 342 | 91 |
| Example 2 | 370 | 339 | 91 |
| Example 3 | 408 | 376 | 92 |

Referring to FIG. 4 and [Table 2], it is confirmed that in the lithium secondary battery comprising the electrolyte for secondary battery, containing the aluminum silicate prepared in Example 2 (red line) and Example 3 (blue line) as an additive according to the present invention, despite the application of aluminum silicate as an electrolyte, the charge and discharge capacity and the initial Columbic efficiency (I.C.E) were not affected, compared to Comparative Example 1 (black line) to which aluminum silicate was not applied.

From the results described above, it can be confirmed that the aluminum silicate for secondary battery additive according to the present invention can be used as an additive for secondary battery.

### 2.2. Confirmation of differential capacity analysis (dQ/dV) according to additives

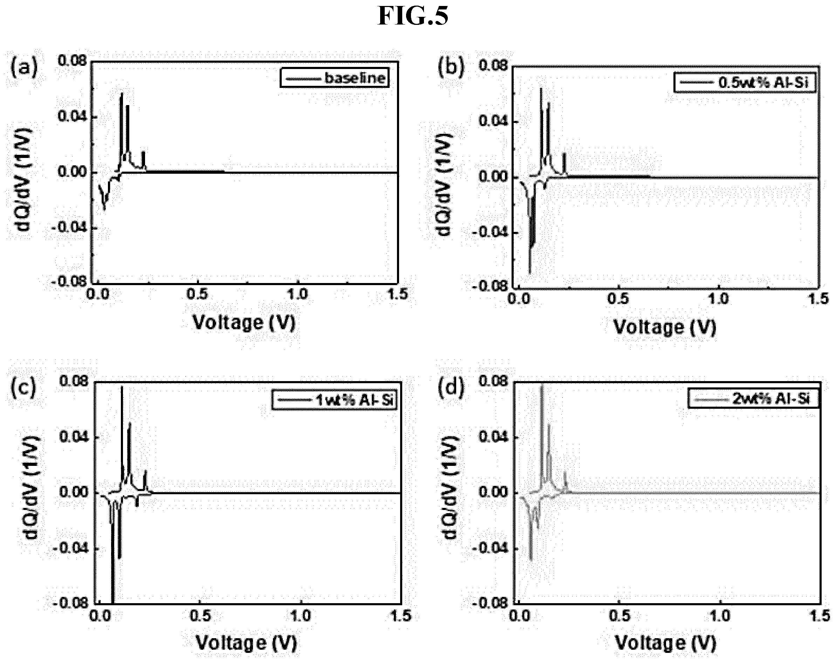

To confirm whether the application of the aluminum silicate according to the present invention as an additive affects a secondary battery, a differential capacity analysis (dQ/dV) was performed with a cathode half cell (natural graphite anode half cell) of a lithium secondary battery comprising the electrolyte for secondary battery, containing the aluminum silicate prepared in Examples 2 and 3 above as an additive. For comparison, a differential capacity analysis was performed in the same manner with a cathode half cell of a lithium secondary battery comprising the electrolyte for a secondary battery, containing the aluminum silicate prepared in Comparative Examples 1 and 2 above as an additive, and the results are shown in FIG. 5.

Referring to FIG. 5, it can be confirmed that the peak was irreversible in the case of the cathode electrode half cell of the lithium secondary battery comprising the electrolyte for secondary battery, containing the aluminum silicate prepared in (a) Comparative Example 1 and (b) Comparative Example 2 as an additive. On the contrary, the peak was reversable in the case of the cathode electrode half cell of the lithium secondary battery comprising the electrolyte for secondary battery, containing the aluminum silicate prepared in (c) Example 2 and (d) Comparative Example 3 as an additive, confirming that a solid electrolyte interphase (SEI) was formed without side reactions.

### 2.3. Confirmation of electrochemical impedance spectroscopy (EIS) according to additives

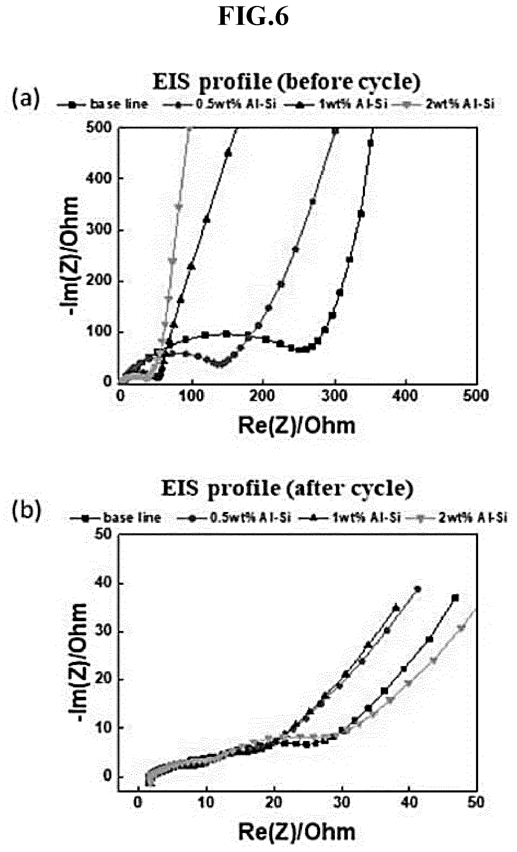

To confirm whether the application of the aluminum silicate according to the present invention as an additive affects a secondary battery, electrochemical impedance spectroscopy (EIS) was performed with a cathode half cell (natural graphite anode half cell) of a lithium secondary battery comprising the electrolyte for secondary battery, containing the aluminum silicate prepared in Example 2 (red line) and Example 3 (blue line) above as an additive. For comparison, electrochemical Impedance Spectroscopy was performed in the same manner with a cathode half cell of a lithium secondary battery comprising the electrolyte for secondary battery, containing the aluminum silicate prepared in Comparative Example 1 (black line) and Comparative Example 2 (green line) above as an additive, and the results are shown in FIG. 6 and [Table 3].

**[Table 3]**

| | R_{b} (Ω) | R_{SEI} (Ω) | R_{CT} (Ω) |
|---|---|---|---|
| Comparative Example 1 | 2.414 | 6.949 | 10.6 |
| Example 2 | 1.493 | 2.837 | 7.498 |
| Example 3 | 1.655 | 3.753 | 6.319 |
| Comparative Example 2 | 1.859 | 8.722 | 10.84 |

| | | | |
|---|---|---|---|
| R_{b} (bulk resistance): Resistance of electrolyte R_{SEI} (SEI layer resistance): Resistance corresponding to charge transfer at SEI layer R_{CT} (charge transfer resistance): Electrolyte-electrode interfacial resistance | | | |

Referring to FIG. 6 and [Table 3], it can be confirmed that when the aluminum silicate was added as an additive, the bulk resistance was definitely small and the R_{SEI} resistance was small. On the contrary, it can be confirmed that when 2 wt% of aluminum silicate was added as an additive, the R_{SEI} resistance considerably increased.

From the above results, it can be confirmed that when the aluminum silicate for secondary battery additive according to the present invention was included in a specific amount, the R_{SEI} resistance was reduced to form a solid-electrolyte interphase (SEI) that facilitates lithium ion transfer.

### 2.4. Confirmation of charge-discharge cycle according to additives

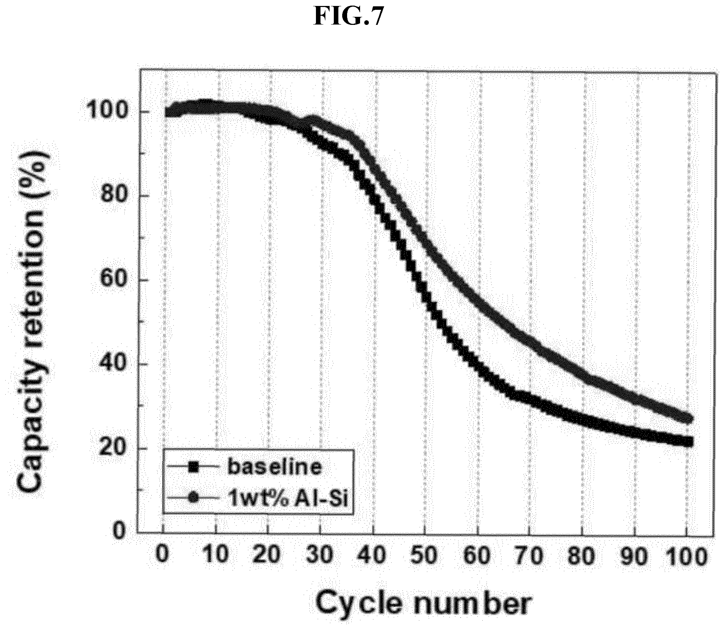

To confirm whether the application of the aluminum silicate according to the present invention as an additive affects a secondary battery, the discharge capacity retention characteristics that change as the charge-discharge cycle proceeds were confirmed with a cathode half cell of a lithium secondary battery comprising the electrolyte for secondary battery, containing the aluminum silicate prepared in Example 3 above as an additive, and the results are shown in FIG. 7.

Referring to FIG. 7, it can be confirmed that the capacity retention rate at 100 cycles was higher in the cathode half cell of a lithium secondary battery comprising the electrolyte for secondary battery, containing the aluminum silicate prepared in Example 3 (blue line) above as an additive, compared to Comparative Example 1 (black line).

### Experimental Example 3. Analysis of effects of the electrolyte for secondary battery, containing aluminum silicate as an additive - Applied to anode

### 2.1 Confirmation of galvanostatic charge-discharge cycles according to additive

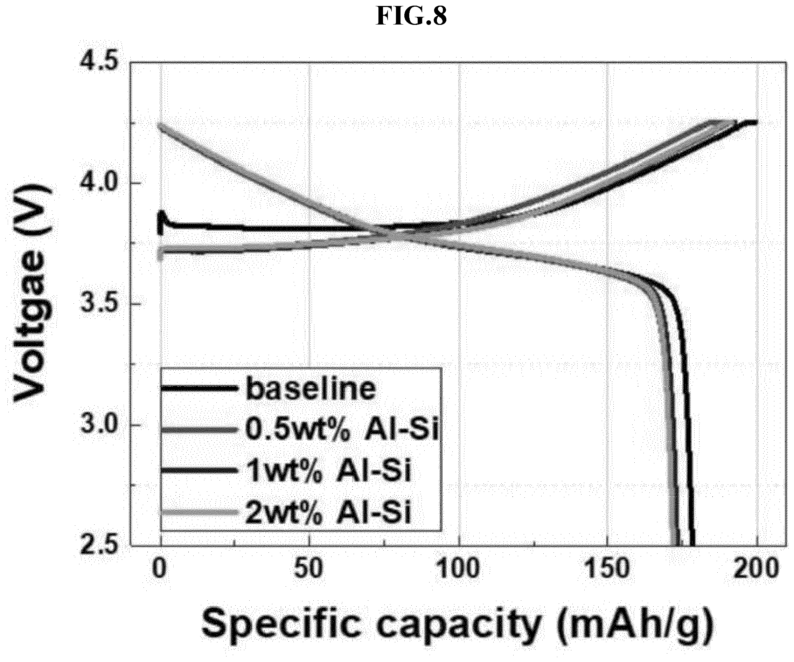

To confirm whether the application of the aluminum silicate according to the present invention as an additive affects the efficiency of a secondary battery, galvanostatic charge-discharge cycles were measured with an anode half cell (NCM622 cathode half cell) of a lithium secondary battery comprising the electrolyte for secondary battery, containing the aluminum silicate prepared in Examples 2 and 3 above as an additive, and the results are shown in FIG. 8 and [Table 4] below.

**[Table 4]**

| | 1^{st} cycle charge capacity (mAh/g) | 1^{st} cycle discharge capacity (mAh/g) | I.C.E (%) |
|---|---|---|---|
| Comparative Example 1 | 199.4 | 178.3 | 89 |
| Example 2 | 191.3 | 171.9 | 90 |
| Example 3 | 192.5 | 173.3 | 90 |

Referring to FIG. 6 and [Table 3], it can be confirmed that when the aluminum silicate was added as an additive, the bulk resistance was definitely small and the R_{SEI} resistance was small. On the contrary, it can be confirmed that when 2 wt% of aluminum silicate was added as an additive, the R_{SEI} resistance considerably increased.

From the above results, it can be confirmed that when the aluminum silicate for secondary battery additive according to the present invention was included in a specific amount, the R_{SEI} resistance was reduced to form a solid-electrolyte interphase (SEI) that facilitates lithium ion transfer.

### 2.4. Confirmation of charge-discharge cycle according to additives

To confirm whether the application of the aluminum silicate according to the present invention as an additive affects a secondary battery, the discharge capacity retention characteristics that change as the charge-discharge cycle proceeds were confirmed with an anode half cell of a lithium secondary battery comprising the electrolyte for secondary battery, containing the aluminum silicate prepared in Example 3 above as an additive, and the results are shown in FIG. 7.

Referring to FIG. 7, it can be confirmed that the capacity retention rate at 100 cycles was higher in the anode half cell of a lithium secondary battery comprising the electrolyte for secondary battery, containing the aluminum silicate prepared in Example 3 (blue line) above as an additive, compared to Comparative Example 1 (black line).

### Experimental Example 3. Analysis of effects of the electrolyte for secondary battery, containing aluminum silicate as an additive - Applied to cathode

### 3.1. Confirmation of galvanostatic charge-discharge cycles according to additive

To confirm whether the application of the aluminum silicate according to the present invention as an additive affects the efficiency of a secondary battery, galvanostatic charge-discharge cycles were measured with a cathode half cell (NCM622 cathode half cell) of a lithium secondary battery comprising the electrolyte for secondary battery, containing the aluminum silicate prepared in Examples 2 and 3 above as an additive, and the results are shown in FIG. 8 and [Table 4] below.

**[Table 4]**

| | R_{b} (Ω) | R_{SEI} (Ω) | R_{CT} (Ω) |
|---|---|---|---|
| Comparative Example 1 (black line) | 1.655 | 390.7 | 129.1 |
| Example 2 (red line) | 1.182 | 308.6 | 65.81 |
| Example 3 (blue line) | 1.315 | 281.3 | 61.66 |

| | | | |
|---|---|---|---|
| R_{b} (bulk resistance): Resistance of electrolyte R_{SEI} (SEI layer resistance): Resistance corresponding to charge transfer at SEI layer R_{CT} (charge transfer resistance): Electrolyte-electrode interfacial resistance | | | |

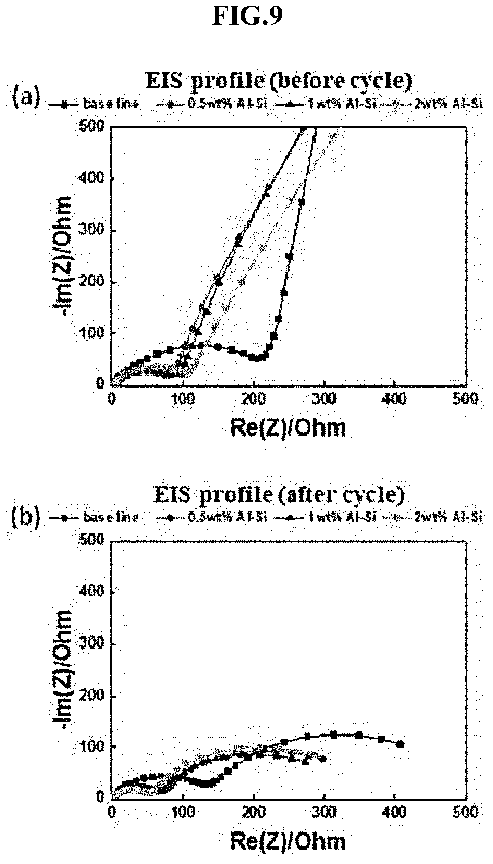

Referring to FIG. 9 and [Table 5], it can be confirmed that when the aluminum silicate was added as an additive, the bulk resistance was definitely small and the R_{SEI} resistance was small.

From the above results, it can be confirmed that when the aluminum silicate for secondary battery additive according to the present invention was included, the R_{SEI} resistance was reduced to form a solid-electrolyte interphase (SEI) that facilitates lithium ion transfer.

From the above description, those skilled in the art pertaining to the present invention will be able to understand that the present invention can be implemented in other specific forms without changing the technical principles or essential features of the present invention. In this regard, the embodiments described above are illustrative in all respects, and should be understood as non-limiting.

## Claims

1. An additive for secondary battery electrolyte, containing aluminum silicate.

2. The additive for secondary battery electrolyte according to claim 1, wherein the aluminum silicate has a particle size of 200 nm to 20 µm.

3. The additive for secondary battery electrolyte according to claim 1, wherein the aluminum silicate has a mass ratio of 60 to 70 wt% of oxygen (O), 0.1 to 2.0 wt% of aluminum (Al), and 25 to 35 wt% of silicon (Si).

4. The additive for secondary battery electrolyte according to claim 1, wherein the aluminum silicate has a surface area of 50 to 1,000 m²/g.

5. The additive for secondary battery electrolyte according to claim 1, wherein the aluminum silicate has a pore size of 0.1 to 20 nm.

6. A preparation method of an additive for secondary battery electrolyte, containing aluminum silicate, the method comprising:
(A1) preparing a first mixture by mixing a surfactant and an aluminum precursor;
(A2) preparing a second mixture by adding a silicate precursor to the first mixture; and
(A3) preparing an additive for secondary battery electrolyte, containing aluminum silicate, by calcinating the second mixture.

7. The preparation method of an additive for secondary battery electrolyte according to claim 6, wherein the (A1) consists of:
(A1a) dissolving the surfactant in a solvent; and
(A1b) preparing a first mixture by adding an aluminum precursor to the dissolved solution.

8. The preparation method of an additive for secondary battery electrolyte according to claim 6, wherein the (A2) consists of:
(A2a) adding a silicate precursor to the first mixture; and
(A2b) preparing a second mixture by heating the first mixture to which the silicate precursor is added.

9. The preparation method of an additive for secondary battery electrolyte according to claim 6, wherein the (A3) consists of:
(A3a) cooling the second mixture; and
(A3b) filtering and drying the cooled second mixture; and
(A3c) preparing an additive for secondary battery electrolyte, containing aluminum silicate, by calcinating the dried second mixture at 300 to 800°C.

10. A secondary battery electrolyte comprising an additive for secondary battery electrolyte, containing the aluminum silicate according to any one of claims 1-5.

11. The secondary battery electrolyte according to claim 10, wherein the secondary battery electrolyte comprises the additive for secondary battery electrolyte in an amount of 0.1 to 2.0% by weight based on the total weight% of the secondary battery electrolyte.

12. A secondary battery comprising the secondary battery electrolyte according to claim 10 or claim 11.
